(19) **Europäisches Patentamt / European Patent Office / Office européen des brevets**

(11) **EP 2 903 132 B1**

(12) **EUROPEAN PATENT SPECIFICATION**

(45) Date of publication and mention
of the grant of the patent:
**31.05.2017 Bulletin 2017/22**

(21) Application number: **12885921.2**

(22) Date of filing: **28.09.2012**

(51) Int Cl.:
***H02J 50/05*** (2016.01)

(86) International application number:
**PCT/JP2012/075232**

(87) International publication number:
**WO 2014/049868 (03.04.2014 Gazette 2014/14)**

(54) **CAPACITIVE-COUPLING-SYSTEM NON-CONTACTING POWER-FEED APPARATUS**

STROMVERSORGUNGSVORRICHTUNG MIT BERÜHRUNGSLOSEM KAPAZITIVEM KOPPLUNGSSYSTEM

APPAREIL D'ALIMENTATION DE SYSTÈME DE COUPLAGE CAPACITIF SANS CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2015 Bulletin 2015/32**

(73) Proprietor: **Fuji Machine Mfg. Co., Ltd.**
**Chiryu-shi**
**Aichi 472-8686 (JP)**

(72) Inventors:
• **SAITO Teruo**
**Chiryu-shi**
**Aichi 472-8686 (JP)**
• **NOMURA Takeshi**
**Chiryu-shi**
**Aichi 472-8686 (JP)**

• **ISHIURA Naomichi**
**Chiryu-shi**
**Aichi 472-8686 (JP)**
• **TAKIKAWA Shinji**
**Chiryu-shi**
**Aichi 472-8686 (JP)**

(74) Representative: **Grünecker Patent- und Rechtsanwälte**
**PartG mbB**
**Leopoldstraße 4**
**80802 München (DE)**

(56) References cited:
**EP-A1- 1 689 062**    **WO-A1-2011/043074**
**WO-A1-2012/070479**    **WO-A1-2012/070479**
**JP-A- 2009 296 857**    **JP-A- 2012 070 614**
**US-A1- 2009 302 690**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a contactless power supply device that supplies power to an electrical load provided on a movable portion from a fixed portion in a contactless manner, and more particularly, to an electrostatic-coupling contactless power supply device in which electrode plates are disposed so as to be spaced apart from each other and face each other.

Background Art

There are a solder printer, a component mounting machine, a reflow machine, a substrate inspection machine, and the like as substrate working machines that produce a substrate on which a plurality of components are mounted. There are many cases in which these machines are connected to each other by a substrate carrying device to construct a substrate production line. Most of these substrate working machines include movable portions that move above a substrate and perform predetermined work, and can use linear motor devices as one kind of means of driving the movable portions. Generally, a linear motor device includes a track member in which N poles and S poles of a plurality of magnets are alternately arranged in line along a moving direction, and a movable portion that includes an armature including a core and coils. In the related art, a deformable power supply cable has been used to supply power to an electrical load that is provided on the movable portion including a linear motor device. Further, the application of a contactless power supply device has been proposed in recent years to solve an adverse effect, such as an increase in a transporting weight due to a power supply cable or a risk of disconnection caused by metal fatigue.

An electromagnetic induction system using a coil has been widely used in the related art as the system of a contactless power supply device. However, an electrostatic-coupling system in which a capacitor is formed by electrodes, which face each other, has been used in recent years, and a magnetic-field resonance system or other is also examined. The use of a contactless power supply device is not limited to a substrate working machine, and becomes widely spread to industrial machines for other industries, home appliances, and the like. A technical example of a contactless power supply device, which is suitable for a magnetic-field resonance system, is disclosed in PTL 1.

A wireless power supply system of PTL 1 includes a power supply device that includes a power generating unit and a resonant element and a power receiving device that supplies power received by a power receiving element to a load, and further includes a frequency characteristic correcting circuit that enhances frequency characteristics while maintaining resonance sharpness (Q value) on a power transmission path in a power supply device or a power receiving device. Further, claim 5 discloses an aspect that has an impedance matching function at a power supply point of the power generating unit. Furthermore, claim 7 discloses an aspect that can adjust transmission characteristics by compensating a coupling depth changing according to a distance between the resonant element and the power receiving element by the impedance matching function. That is, a function, which maintains stable power supply performance even though various power supply conditions including the distance between the resonant element and the power receiving element are changed, is added in claims 5 and 7.

Citation List

Patent Literature

PTL 1: JP-A-2012-34494

EP 1 689 062 A1 which is considered to represent the closest prior art discloses an electrostatic-coupling contactless power supply system that detects the impedances of the transfer electrodes. The sensing signal is generated by the power generator using the same frequency as for power transfer but with a lower amplitude.

Summary of Invention

Technical Problem

Incidentally, when a substrate working machine is provided with a contactless power supply device, the total weight of a movable portion is increased due to an increase in the weight of a coil in an electromagnetic induction system and structural restriction, which is to avoid magnetic field interference with a linear motor device, is generated. For this reason, an electrostatic-coupling system is promising. Further, in order to obtain large power supply capacity, it is preferable that inductors for resonance are connected in series to capacitors, which are formed by electrodes of the fixed portions and the movable portion, to form a series resonant circuit and large current flows.

Here, when a rail member or the like, which is used to move the movable portion, is worn, the electrodes of the fixed portion and the movable portion are distorted, or an insulation layer formed on the surface of the electrode is damaged due to long-term use, the capacitances of the capacitors are changed. Accordingly, resonant frequency characteristics are changed. This corresponds to the change of the coupling depth in PTL 1. The frequency characteristic correcting circuit of PTL 1 is suitable for a magnetic-field resonance system, but is not suitable for the change of electrostatic-coupling capacitance. In order to maintain large power supply capacity and high power supply efficiency in the electrostatic-coupling system, it is preferable that control is performed according to the change of the capacitance so that a power supply frequency always corresponds to a resonant frequency. For example, when the capacitance of the capacitor is reduced by an increase in a clearance between the electrodes, the resonant frequency of the series resonant circuit is increased. Accordingly, power supply capacity is reduced and an operation is unstable as it is. For this reason, it is preferable that the power supply frequency is controlled so as to be increased according to the reduction in the capacitance.

Further, when the clearance between the electrodes is reduced, the capacitance is increased. Accordingly, the reduction in a frequency is preferable, but there is a concern that a short-circuit failure between the electrodes may occur. That is, when a clearance between the electrodes is shorter than a design allowable value, there is a concern that power cannot be supplied due to a short circuit between the electrodes or a power supply circuit is burned out.

Accordingly, in the electrostatic-coupling contactless power supply device, it is possible to detect the abnormality of the electrode by detecting the capacitances of the capacitors formed by the electrodes of the fixed portion and the movable portion. Accordingly, it is possible to prevent a short-circuit failure or an unstable operation in advance. That is, it is possible to safely and stably operate the device. Further, it is possible to maintain large power supply capacity and high power supply efficiency by reflecting the detected capacitances on the control of the power supply frequency. Furthermore, it is possible to appropriately determine whether or not maintenance is necessary from the state of change in the capacitances. However, a technique for detecting the capacitances of the capacitors during the operation is not yet put to practical use in the electrostatic-coupling contactless power supply device in the related art.

The invention has been made in consideration of the problem in the background described above, and an object of the invention is to provide an electrostatic-coupling contactless power supply device that can detect the abnormality of electrodes by detecting the capacitance of a capacitor formed by electrodes of a fixed portion and a movable portion, prevent a short-circuit failure or an unstable operation in advance, maintain large power supply capacity and high power supply efficiency, and appropriately determine whether or not maintenance is necessary.

Solution to Problem

According to an invention of claim 1 to achieve the object, an electrostatic-coupling contactless power supply device includes: a plurality of power supply electrodes that are provided on a fixed portion; a high-frequency power supply circuit that supplies high-frequency power between the plurality of power supply electrodes; a plurality of power receiving electrodes that are provided on a movable portion movably mounted on the fixed portion, face the plurality of power supply electrodes so as to be spaced apart from the power supply electrodes, and receive high-frequency power in a contactless manner; a power receiving circuit that converts the high-frequency power received by the plurality of power receiving electrodes and supplies the converted high-frequency power to an electrical load provided on the movable portion; and an electrode abnormality detecting section that detects capacitances of capacitors formed by the power supply electrodes and the power receiving electrodes facing each other so as to be spaced apart from each other, and detects abnormality occurring in at least one of the power supply electrodes and the power receiving electrodes on the basis of changes in the capacitances.

The electrode abnormality detecting section includes a closed circuit for detection that includes the capacitors and does not include the high-frequency power supply circuit and the electrical load, an AC signal source that is provided in the closed circuit for detection and outputs an AC signal having a detection frequency different from a power supply frequency obtained when the high-frequency power supply circuit supplies the high-frequency power, a filter unit that is provided in the closed circuit for detection so as to be close to the movable portion, allows the AC signal having the detection frequency to pass therethrough, and blocks a signal having the power supply frequency, and a detector that is provided in the closed circuit for detection and detects the AC signal having the detection frequency.

According to a preferred embodiment the AC signal source and the detector are disposed on the fixed portion.

According to a preferred embodiment the detector is formed of a capacitance measuring unit using an operational amplifier or a capacitance measuring unit using an AC bridge circuit.

According to a preferred embodiment the electrostatic-coupling contactless power supply device according to any one of claims 2 to 4, further includes a display that is connected to the detector and displays at least one of the detected capacitances and the detected abnormality of the electrodes.

According to a preferred embodiment the high-frequency power supply circuit adjusts the power supply frequency obtained when the high-frequency power supply circuit supplies the high-frequency power, and the electrostatic-coupling contactless power supply device further includes an inductor for resonance that is connected to the capacitor in series and forms a series resonant circuit, and a resonance controller that maintains a series resonance state of the series resonant circuit by variably controlling the power supply frequency of the high-frequency power supply circuit on the basis of the capacitances of the capacitors detected by the electrode abnormality detecting section.

Advantageous Effects of Invention

In the electrostatic-coupling contactless power supply device according to the invention of claim 1, the electrode abnormality detecting section detects capacitances of capacitors formed by the power supply electrodes and the power receiving electrodes, and detects abnormality occurring in at least one of the electrodes on the basis of changes in the capacitances. As the abnormality of the electrode, there are the change in a clearance between the electrodes that occurs due to a certain reason, damage to the insulation layer that is formed on the surface of the electrode, and the like. The capacitance accompanied by abnormality is changed. Accordingly, since the electrode abnormality detecting section can prevent a short-circuit failure, which is caused by the reduction in a clearance between the electrodes, damage to the insulation layer, or the like, in advance by detecting these abnormalities, it is possible to prevent an unstable operation, which is caused by an increase in a clearance between the electrodes or the like, in advance. Furthermore, it is possible to appropriately determine whether or not maintenance is necessary from the state of change in the capacitances.

In the invention the electrode abnormality detecting section includes the closed circuit for detection, the AC signal source, the filter unit, and the detector. Further, only an AC signal having the detection frequency flows in the closed circuit for detection by the action of the filter unit and a signal having the power supply frequency of the high-frequency power supply circuit does not flow in the closed circuit for detection. Accordingly, it is possible to detect the capacitances between the electrodes without being affected by a signal having the power supply frequency even though the device is being operated. Further, since a signal having the power supply frequency does not wastefully flow in the closed circuit for detection, power supply efficiency is not lowered.

In a preferred embodiment the AC signal source and the detector are disposed on the fixed portion. Accordingly, the weight of the movable portion is not increased for the detection of the capacitance of the capacitor. Further, since power necessary for the operation of the AC signal source and the detector can be supplied on the fixed portion, power to be supplied through the contactless power supply may not be increased for detection.

In a preferred embodiment the detector is formed of a capacitance measuring unit using an operational amplifier or a capacitance measuring unit using an AC bridge circuit. Since the capacitance measuring unit has high accuracy, the capacitances of the capacitors can be highly accurately detected even though the device is being operated.

In a preferred embodiment the electrostatic-coupling contactless power supply device further includes a display that is connected to the detector and displays at least one of the detected capacitances and the detected abnormality of the electrodes. Accordingly, a worker is reliably informed of the detection result of the electrode abnormality detecting section.

In a preferred embodiment a resonance controller maintains a series resonance state of the series resonant circuit by variably controlling the power supply frequency of the high-frequency power supply circuit on the basis of the capacitances of the capacitors detected by the electrode abnormality detecting section. Accordingly, large power supply capacity and high power supply efficiency can be maintained even though the capacitance changes within a normal range to some extent during the operation.

Brief Description of Drawings

[Fig. 1] Fig. 1 is a perspective view showing the entire structure of a component mounting machine to which an electrostatic-coupling contactless power supply device according to a first embodiment of the invention can be applied.

[Fig. 2] Fig. 2 is a view schematically illustrating the structure of a general electrostatic-coupling contactless power supply device.

[Fig. 3] Fig. 3 is a view schematically illustrating the structure of the electrostatic-coupling contactless power supply device according to the first embodiment of the invention.

[Fig. 4] Fig. 4 is an electronic circuit diagram of a capacitance measuring unit that is an example of a structure in which an AC signal source and a detector of an electrode abnormality detecting section are integrated with each other.

[Fig. 5] Fig. 5 is a waveform diagram showing the charge/discharge states of capacitors of the capacitance measuring unit.

[Fig. 6] Fig. 6 is a waveform diagram showing a final output voltage of the capacitance measuring unit.

[Fig. 7] Fig. 7 is a view schematically illustrating the structure of an electrostatic-coupling contactless power supply device according to a second embodiment.

[Fig. 8] Fig. 8 is a view schematically illustrating the structure of an electrostatic-coupling contactless power supply device according to a third embodiment.

Description of Embodiments

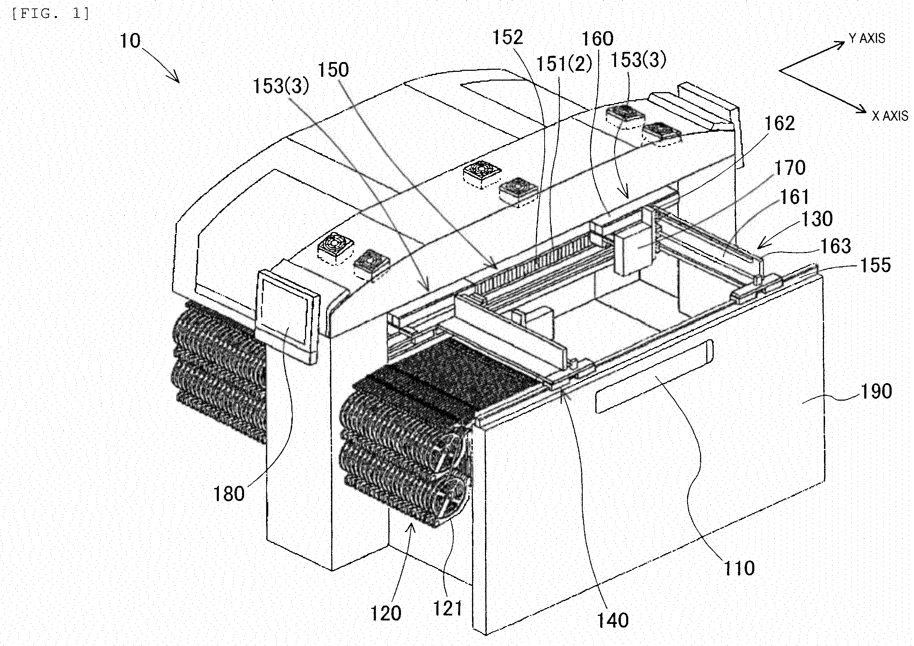

First, a component mounting machine 10 to which the invention can be applied will be described with reference to Fig. 1. Fig. 1 is a perspective view showing the entire structure of the component mounting machine 10 to which an electrostatic-coupling contactless power supply device 1 according to a first embodiment of the invention can be applied. The component mounting machine 10 is an apparatus for mounting a plurality of components on a substrate, and includes two sets of component mounting units that have the same structure and are substantially symmetrically disposed. Here, a component mounting unit from which a front right cover of Fig. 1 has been removed will be described as an example. Meanwhile, the width direction of the component mounting machine 10, which is directed to the front right side from the rear left side in Fig. 1, is referred to as an X-axis direction, and the longitudinal direction of the component mounting machine 10 is referred to as a Y-axis direction.

The component mounting machine 10 has a structure in which a substrate carrying device 110, component supply devices 120, two component transfer devices 130 and 140, and the like are assembled on a machine base 190. The substrate carrying device 110 is provided so as to cross the vicinity of a longitudinal middle portion of the component mounting machine 10 in the X-axis direction. The substrate carrying device 110 includes a carrying conveyor (not shown), and carries a substrate in the X-axis direction. Further, the substrate carrying device 110 includes a clamp unit (not shown), and fixes and holds a substrate at a predetermined mounting position. The component supply devices 120 are provided at a front portion (a front left side in Fig. 1) and a rear portion (not shown) of the component mounting machine 10 in the longitudinal direction. The component supply devices 120 include a plurality of cassette-type feeders 121, and are adapted to continuously supply components to the two component transfer devices 130 and 140 from carrier tapes that are set in the respective feeders 121.

The two component transfer devices 130 and 140 are so-called XY robot-type devices that can move in the X-axis direction and the Y-axis direction. The two component transfer devices 130 and 140 are provided at the front and rear portions of the component mounting machine 10 in the longitudinal direction so as to face each other. Each of the component transfer devices 130 and 140 includes a linear motor device 150 for movement in the Y-axis direction.

The linear motor device 150 includes a track member 151 and an auxiliary rail 155 that are common to the two component transfer devices 130 and 140, and linear movable portions 153 that are respectively provided for the two component transfer devices 130 and 140. The track member 151 corresponds to a part of a fixed portion 2 of the invention, and extends in the Y-axis direction that is a moving direction of the linear movable portion 153. The track member 151 includes a bottom that is disposed below the linear movable portion 153 and sides that are disposed on both sides of the linear movable portion 153, and is formed in the shape of a groove that is opened upward. A plurality of magnets 152 are arranged in line in the Y-axis direction on the inner surfaces of the sides, which face each other, of the track member 151.

The linear movable portions 153 are movably mounted on the track member 151. The linear movable portion 153 corresponds to a movable portion 3 of the invention, and includes a movable body portion 160, an X-axis rail 161, a mounting head 170, and the like. The movable body portion 160 extends in the Y-axis direction, and armatures, which generate a propulsive force against the magnets 152 of the track member 151, are provided on both side surfaces of the movable body portion 160. The X-axis rail 161 extends from the movable body portion 160 in the X-axis direction. One end 162 of the X-axis rail 161 is coupled with the movable body portion 160, and the other end 163 thereof is movably mounted on the auxiliary rail 155. Accordingly, the X-axis rail 161 is adapted to move integrally with the movable body portion 160 in the Y-axis direction.

The component mounting head 170 is mounted on the X-axis rail 161 and is adapted to move in the X-axis direction. A suction nozzle (not shown) is provided at the lower end of the component mounting head 170. The suction nozzle sucks and picks up a component from the component supply device 120 by using negative pressure, and mounts the component on the substrate that is held at the mounting position. A ball screw feed mechanism (not shown), which is provided on the X-axis rail 161, includes an X-axis motor that rotationally drives a ball screw, and drives the component mounting head 170 in the X-axis direction. A plurality of electrical components, which are provided on the linear movable portion 153 (the movable portion 3) to operate the component mounting head 170, correspond to an electrical load in the invention. Meanwhile, the armatures of the linear motor device 150 are also included in the electrical load.

In addition, the component mounting machine 10 includes a display setting device 180 that exchanges information with an operator, a camera (not shown) that takes an image of a substrate or a component, and the like.

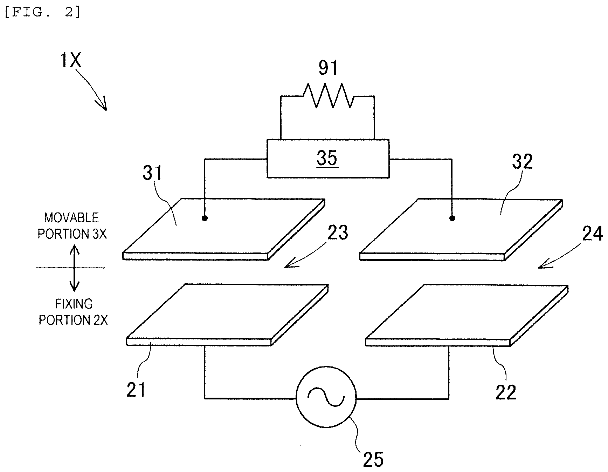

Next, a general electrostatic-coupling contactless power supply device 1X will be described with reference to Fig. 2. Fig. 2 is a view schematically illustrating the structure of the general electrostatic-coupling contactless power supply device 1X. A fixed portion 2X, which is shown on the lower side in Fig. 2, is provided with two power supply electrodes 21 and 22 and a high-frequency power supply circuit 25. The two power supply electrodes 21 and 22 are formed of metal plates or the like, and are electrically connected to the high-frequency power supply circuit 25. The high-frequency power supply circuit 25 supplies high-frequency power that corresponds to a power supply frequency in the range of, for example, 100 kHz to several MHz between the two power supply electrodes 21 and 22. Since the power supply frequency and an output voltage of the high-frequency power supply circuit 25 can be adjusted, a sine wave, a rectangular wave, or the like can be exemplified as the waveform of the output voltage.

Further, a movable portion 3X, which is shown on the upper side in Fig. 2, is provided with two power receiving electrodes 31 and 32 and a power receiving circuit 35, and an electrical load 91 is mounted on the movable portion 3X. The two power receiving electrodes 31 and 32 are formed of metal plates or the like, and are disposed so as to be parallel to the power supply electrodes 21 and 22 provided on the fixed portion 2X, face the power supply electrodes 21 and 22, and be spaced apart from the power supply electrodes 21 and 22, respectively. Accordingly, two capacitors 23 and 24 are formed between the power supply electrodes 21 and 22 and the power receiving electrodes 31 and 32 and electrostatic-coupling contactless power supply is performed. The two power receiving electrodes 31 and 32 are electrically connected to an input side of the power receiving circuit 35, and an output side of the power receiving circuit 35 is electrically connected to the electrical load 91. The power receiving circuit 35 converts high-frequency power, which is received by the power receiving electrodes 31 and 32, and supplies the converted high-frequency power to the electrical load 91. The power receiving circuit 35 is configured in accordance with the power supply specifications of the electrical load 91. For example, a full-wave rectification circuit, an inverter circuit, or the like is used as the power receiving circuit 35.

Furthermore, a series resonant circuit is generally used for the improvement in power supply capacity and power supply efficiency. That is, an inductor for resonance having an appropriate inductance value is connected in series to the capacitors 23 and 24 so that series resonance occurs at the power supply frequency of the high-frequency power supply circuit 25. In addition, the power supply frequency is also variably adjusted.

When the general electrostatic-coupling contactless power supply device 1X is assembled in the component mounting machine 10, there is a concern that the following abnormality of electrodes occurs due to long-term use. For example, when the track member 151 of the fixed portion 2X on which the movable portion 3X is movably mounted is worn or deformed, or when members of the movable portion 3X supported by the track member 151 are worn, a clearance between the electrodes is changed. Further, the power supply electrodes 21 and 22 are actually formed in the shape of a long narrow strip that extends in the longitudinal direction of the track member 151, and distortion, such as deflection or warpage, is generated. Furthermore, when insulation layers are formed on the surfaces of the power supply electrodes 21 and 22 and the power receiving electrodes 31 and 32, damage, such as the separation of the insulation layer, occurs. When the abnormality of the electrodes occurs, the capacitances of the capacitors 23 and 24 formed by the power supply electrodes 21 and 22 and the power receiving electrodes 31 and 32 are changed. For this reason, it is not preferable that the abnormality of the electrodes occurs. Accordingly, an electrode abnormality detecting section 4, which detects the abnormality of the electrodes 21, 22, 31, and 32 by detecting the capacitances of the capacitors 23 and 24, is provided in the invention.

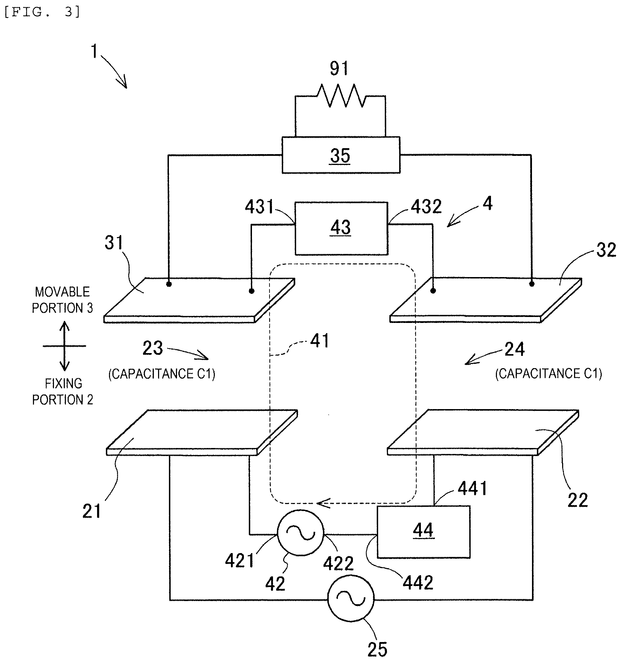

1 Fig. 3 is a view schematically illustrating the structure of an electrostatic-coupling contactless power supply device 1 according to a first embodiment of the invention. Like the general device 1X, the electrostatic-coupling contactless power supply device 1 according to the first embodiment includes: power supply electrodes 21 and 22 and a high-frequency power supply circuit 25 that are provided on a fixed portion 2; and power receiving electrodes 31 and 32 and a power receiving circuit 35 that are provided on a movable portion 3. The electrostatic-coupling contactless power supply device 1 according to the first embodiment further includes the electrode abnormality detecting section 4. The electrode abnormality detecting section 4 includes a closed circuit 41 for detection, an AC signal source 42, a filter unit 43, and a detector 44.

The closed circuit 41 for detection is formed over both the fixed portion 2 and the movable portion 3 as shown in Fig. 3 by a broken-line arrow. The closed circuit 41 for detection is a circuit including capacitors 23 and 24 having two capacitances C1 that are formed by power supply electrodes 21 and 22 and power receiving electrodes 31 and 32 and not including the high-frequency power supply circuit 25 and the electrical load 91. The capacitors 23 and 24, the AC signal source 42, the filter unit 43, and the detector 44 are connected by conductive wires, so that the closed circuit 41 for detection is formed.

The AC signal source 42 is provided in the closed circuit 41 for detection so as to be close to the fixed portion 2. One output terminal 421 of the AC signal source 42 is connected to one power supply electrode 21, and the other output terminal 422 thereof is connected to the detector 44. The AC signal source 42 outputs an AC signal having a detection frequency that is different from the power supply frequency of the high-frequency power supply circuit 25. The detection frequency may be higher or lower than the power supply frequency.

The filter unit 43 is provided in the closed circuit 41 for detection so as to be close to the movable portion 3. One terminal 431 of the filter unit 43 is connected to one power receiving electrode 31, and the other terminal 432 thereof is connected to the other power receiving electrode 32. The filter unit 43 allows an AC signal, which has the detection frequency, to pass therethrough and blocks a signal having the power supply frequency. A low-pass filter or a high-pass filter can be used as the filter unit 43 on the basis of the magnitudes of the detection frequency and the power supply frequency, and a bandpass filter or a band-stop filter can be used instead of the filter unit 43.

The detector 44 is provided in the closed circuit 41 for detection so as to be close to the fixed portion 2. One detection terminal 441 of the detector 44 is connected to the other power supply electrode 22, and the other detection terminal 442 thereof is connected to the other output terminal 422 of the AC signal source 42. The detector 44 detects an AC signal that is output from the AC signal source 42 and circulates in the closed circuit 41 for detection.

In the above-mentioned closed circuit 41 for detection, an AC signal output from one output terminal 421 of the AC signal source 42 returns to the other output terminal 422 of the AC signal source 42 through one capacitor 23, the filter unit 43, the other capacitor 24, and the detector 44. Accordingly, the two capacitors 23 and 24 are connected to each other in series, and a total capacitance is a half of the individual capacitance C1. Further, the AC signal, which is detected by the detector 44, changes depending on the magnitudes of the capacitances C1 of the two capacitors 23 and 24.

Meanwhile, a receiving voltage having the power supply frequency is generated between the power receiving electrodes 31 and 32 by high-frequency power that is supplied from the high-frequency power supply circuit 25 during the operation of the device 1 and has the power supply frequency. This receiving voltage is applied to not only the power receiving circuit 35 but also the closed circuit 41 for detection, but a signal having the power supply frequency does not flow in the closed circuit 41 for detection due to a blocking action of the filter unit 43. Accordingly, even though the device 1 is being operated, the electrode abnormality detecting section 4 can detect the capacitances C1 of the two capacitors 23 and 24 on the basis of the AC signal that is detected by the detector 44.

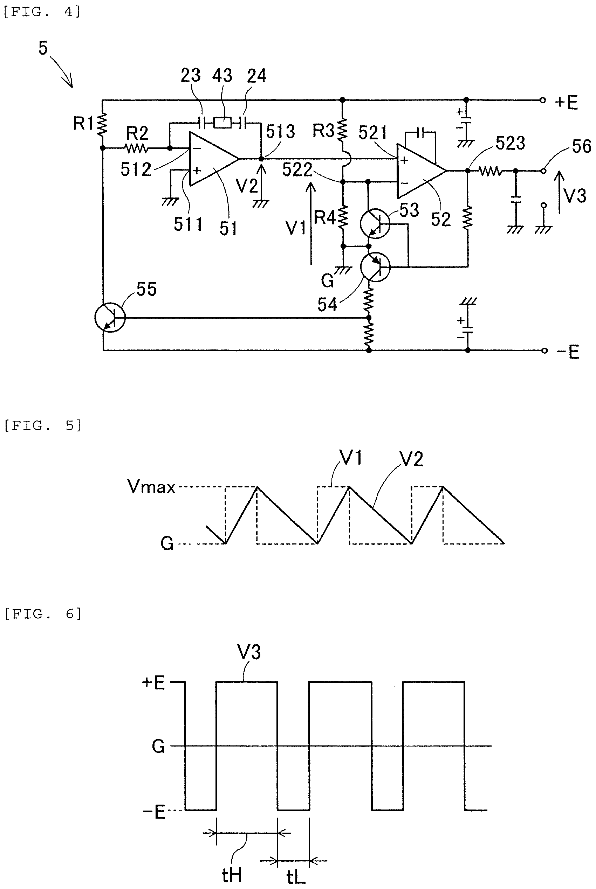

Fig. 4 is an electronic circuit diagram of a capacitance measuring unit 5 that is an example of a structure in which the AC signal source 42 and the detector 44 of the electrode abnormality detecting section 4 are integrated with each other. As shown in Fig. 4, the capacitance measuring unit 5 includes first and second operational amplifiers 51 and 52, and further includes a DC power supply having a power supply voltage $\pm E$, first to third transistors 53, 54, and 55, and peripheral elements thereof. Hereinafter, the outline of the circuit will be described.

The two capacitors 23 and 24, which perform contactless power supply, and the filter unit 43 are connected in series as objects, which are to be measured, between an output terminal 513 and a negative-side input terminal 512 of the first operational amplifier 51. Further, a positive-side power supply voltage +E of the DC power supply is input to the negative-side input terminal 512 of the first operational amplifier 51 through a first resistor R1 and a second resistor R2, and a positive-side input terminal 511 is grounded. Furthermore, the output terminal 513 of the first operational amplifier 51 is directly connected to a positive-side input terminal 521 of the second operational amplifier 52. The first operational amplifier 51 acts as a Miller integrator.

A negative-side input terminal 522 of the second operational amplifier 52 is connected to a voltage dividing point (where a voltage V1 is generated) where a voltage between the positive-side power supply voltage +E of the DC power supply and a ground point G is divided by third and fourth resistors R3 and R4. An output terminal 523 of the second operational amplifier 52 is connected to a final output terminal 56 of the entire circuit. The second operational amplifier 52 acts as a differential amplifier, and the level of the final output terminal 56 is high only at a period of time where the voltage of the positive-side input terminal 521 is higher than the voltage of the negative-side input terminal 522.

Further, the first and second transistors 53 and 54 are formed of Schmidt circuits, and a rectangular AC voltage is generated by an oscillation action. A rectangular AC voltage V1 of the negative-side input terminal 522 of the second operational amplifier 52 is positively fed back to the negative-side input terminal 512 of the first operational amplifier 51 through the Schmidt circuits, the third transistor 55, and the second resistor R2. Accordingly, the capacitors 23 and 24 are repeatedly charged and discharged.

Fig. 5 is a waveform diagram showing the charge/discharge states of the capacitors 23 and 24 of the capacitance measuring unit 5, and Fig. 6 is a waveform diagram showing a final output voltage V3 of the capacitance measuring unit 5. In Figs. 5 and 6, horizontal axes are time axes having the same scale and vertical axes represent a voltage. Further, a rectangular AC voltage V1 shown in Fig. 5 by a broken line means a voltage V1 of the negative-side input terminal 522 of the second operational amplifier 52, and the capacitors 23 and 24 are charged and discharged with the rectangular AC voltage V1. Meanwhile, the maximum value Vmax of the rectangular AC voltage V1 is E·R4/(R3+R4). Furthermore, a triangular wave voltage V2 shown by a solid line means a voltage of the output terminal 513 of the first operational amplifier 51. In a Miller integrator using the first operational amplifier 51, the triangular wave voltage V2 can be obtained by integrating the rectangular AC voltage V1. Meanwhile, the level of the final output voltage V3 of Fig. 6 is high at a period of time when the triangular wave voltage V2 is higher than the rectangular AC voltage V1, and becomes low at other periods of time.

Here, the rising gradient of the triangular wave voltage V2 is proportional to charge time constants $\tau1$ of the capacitors 23 and 24, and the falling gradient thereof is proportional to discharge time constants $\tau2$ of the capacitors 23 and 24. Further, as understood from the circuit diagram of Fig. 4, the charge time constant $\tau1$ and the discharge time constant $\tau2$ are obtained from the following equations.

$$\text{Charge time constant } \tau 1 = (R1 + R2) \times (C1/2)$$

$$\text{Discharge time constant } \tau 2 = R2 \times (C1/2)$$

When the capacitance C1 of the above-mentioned equations is large, the charge time constant $\tau 1$ and the discharge time constant $\tau 2$ become large and the gradient of the triangular wave voltage V2 becomes gentle. Accordingly, the duration tH of the high level of the final output voltage V3 and the duration tL of the low level thereof become long. Conversely, when the capacitance C1 is small, the duration tH and the duration tL become short. Accordingly, in the capacitance measuring unit 5, at least one of the duration tH of the high level of the final output voltage V3 and the duration tL of the low level thereof can be measured and can be converted into the capacitance C1.

Meanwhile, the configurations of the AC signal source 42 and the detector 44 are not limited to the above-mentioned capacitance measuring unit 5. For example, instead of the capacitance measuring unit 5, another type of capacitance measuring unit can be configured by the application of an AC bridge circuit that is called a Schering bridge.

Abnormality, which occurs in at least one of the power supply electrodes 21 and 22 and the power receiving electrodes 31 and 32, can be detected on the basis of the capacitance C1 that is detected as described above. For example, a predetermined caution-determination width is set for a design reference value of the capacitance C1, and an abnormality-determination width greater than the caution-determination width is set. Meanwhile, it is preferable that the caution-determination width and the abnormality-determination width are set for the design reference value on both an increase side and a decrease side. Further, when the detected capacitance C1 deviates from the range of the caution-determination width, a caution state is determined and, for example, maintenance can be recommended. Furthermore, when the detected capacitance C1 deviates from the range of the abnormality-determination width, an abnormal state is determined and, for example, the device 1 can be forcibly made to stop. The determination of caution or abnormality and the measures at this time are not limited to the above-mentioned determination and measures, and other methods may be employed.

The detection of the capacitance C1 and the detection of abnormality can be regularly performed even though the device 1 is being operated. Since it is possible to highly accurately detect the change in the capacitance C1, which is accompanied by the movement of the movable portion 3, by performing the detection of the capacitance C1 and the detection of abnormality during the operation of the device 1, the accuracy of abnormality determination is improved.

In the electrostatic-coupling contactless power supply device 1 according to the first embodiment, the electrode abnormality detecting section 4 includes the closed circuit 41 for detection, the filter unit 43, and the capacitance measuring unit 5 in which the AC signal source 42 and the detector 44 are integrated with each other. Only an AC signal having a detection frequency flows in the closed circuit 41 for detection by the action of the filter unit 43 and a signal having the power supply frequency of the high-frequency power supply circuit 25 does not flow in the closed circuit 41 for detection. For this reason, the electrode abnormality detecting section 4 can detect the capacitances C1 of the capacitors 23 and 24, which are formed by the power supply electrodes 21 and 22 and the power receiving electrodes 31 and 32, without being affected by a signal having the power supply frequency even though the device 1 is being operated. In addition, it is possible to detect abnormality, which has occurred in any one of the electrodes, on the basis of the change in the capacitances C1. As the abnormality of the electrode, there are the change in a clearance between the electrodes that occurs due to a certain reason, damage to the insulation layer that is formed on the surface of the electrode, and the like. Accordingly, since the electrode abnormality detecting section 4 can prevent a short-circuit failure, which is caused by the reduction in a clearance between the electrodes, damage to the insulation layer, or the like, in advance by detecting these abnormalities, it is possible to prevent an unstable operation, which is caused by an increase in a clearance between the electrodes or the like, in advance. In addition, it is possible to appropriately determine whether or not maintenance is necessary from the state of change in the capacitances C1 and C1.

Further, since a signal having the power supply frequency does not wastefully flow in the closed circuit 41 for detection, power supply efficiency is not lowered. Furthermore, since the capacitance measuring unit 5 in which the AC signal source 42 and the detector 44 are integrated with each other has high accuracy, the capacitances C1 of the capacitors 23 and 24 can be highly accurately detected even though the device 1 is being operated. In addition, since the capacitance measuring unit 5 is disposed on the fixed portion 2, the weight of the movable portion 3 is not increased for the detection of the capacitance C1 of the capacitor. Further, since power necessary for the operation of the capacitance measuring unit 5 can be supplied on the fixed portion 2, power to be supplied through the contactless power supply may not be increased for detection.

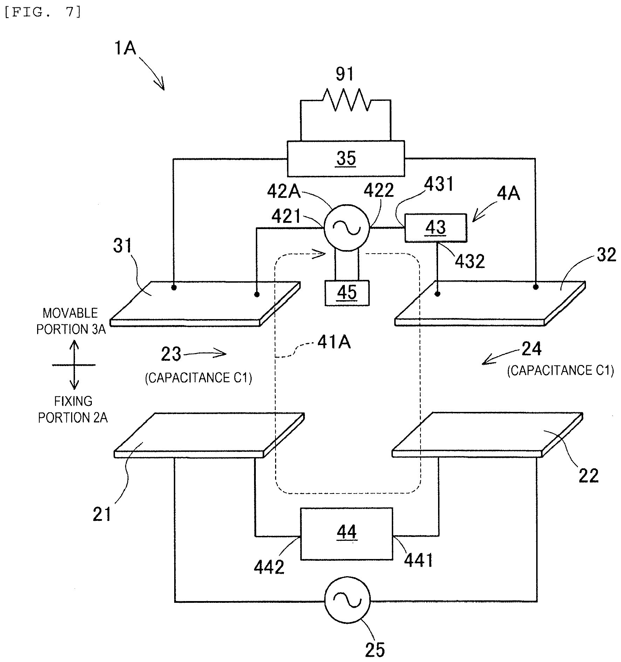

Next, a difference between an electrostatic-coupling contactless power supply device 1A according to a second embodiment of which the configuration of an electrode abnormality detecting section 4A is different from that of the first embodiment and the electrostatic-coupling contactless power supply device according to the first embodiment will be mainly described. Fig. 7 is a view schematically illustrating the structure of the electrostatic-coupling contactless power supply device 1A according to the second embodiment. In the second embodiment, the electrode abnormality detecting section 4A includes a closed circuit 41A for detection, an AC signal source 42A, a driving battery 45, a filter unit 43, and a detector 44.

The closed circuit 41A for detection is formed as in the first embodiment, and the disposition and connection order of circuit components thereof are different from those of the first embodiment. The AC signal source 42A is provided in the closed circuit 41A for detection so as to be close to a movable portion 3A. One output terminal 421 of the AC signal source 42A is connected to one power receiving electrode 31, and the other output terminal 422 is connected to the filter unit 43. The driving battery 45 is provided close to the movable portion 3A, as a power source of the AC signal source 42A. The driving battery 45 is a part of the electrical load 91 and is adapted so as to be charged by the power receiving circuit 35.

The filter unit 43 is provided in the closed circuit 41A for detection so as to be close to the movable portion 3A. One terminal 431 of the filter unit 43 is connected to the AC signal source 42A, and the other terminal 432 thereof is connected to the other power receiving electrode 32. The detector 44 is provided in the closed circuit 41A for detection so as to be close to a fixed portion 2A. One detection terminal 441 of the detector 44 is connected to the other power supply electrode 22, and the other detection terminal 442 is connected to one power supply electrode 21.

Since the actions and effects of the electrostatic-coupling contactless power supply device 1A of the second embodiment are similar to those of the first embodiment even though the disposition of the AC signal source 42A is different from that of the first embodiment, the description thereof will be omitted.

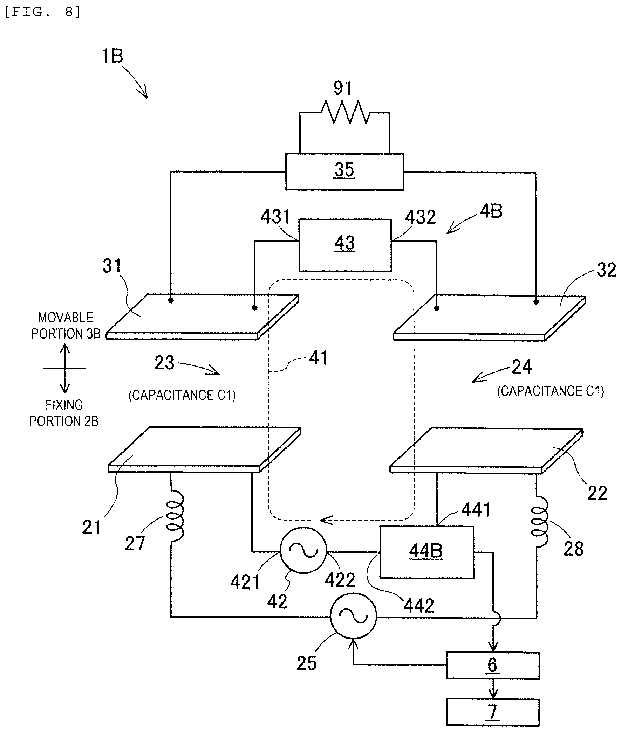

Next, a difference between an electrostatic-coupling contactless power supply device 1B according to a third embodiment and the electrostatic-coupling contactless power supply devices according to the first and second embodiments will be mainly described. Fig. 8 is a view schematically illustrating the structure of the electrostatic-coupling contactless power supply device 1B according to the third embodiment. A series resonant circuit is used and a power supply frequency is variably controlled in the third embodiment so that high power supply efficiency is maintained. As shown in Fig. 8, the configuration of a movable portion 3B of the third embodiment is the same as that of the first embodiment. Further, the configuration of a fixed portion 2B of the third embodiment is obtained by adding inductors 27 and 28 for resonance, a resonance controller 6, and a display 7 to the first embodiment.

The two inductors 27 and 28 for resonance are respectively connected between the two power supply electrodes 21 and 22 and the high-frequency power supply circuit 25 of the fixed portion 2B. Accordingly, the inductors 27 and 28 for resonance are connected in series to capacitors 23 and 24 that are formed by the power supply electrodes 21 and 22 and the power receiving electrodes 31 and 32. Coils are generally used as the inductors 27 and 28 for resonance.

Meanwhile, the resonance controller 6 is connected to a detector 44B of an electrode abnormality detecting section 4B, and the display 7 is connected to the resonance controller 6. The detector 44B, the resonance controller 6, and the display 7 are adapted to be capable of transmitting information through, for example, a communication line or a radio communication unit. Further, the capacitances C1 detected by the detector 44B and the information about the abnormalities of the electrodes are transmitted to the resonance controller 6 and the display 7.

The resonance controller 6 maintains the series resonance state of the series resonant circuit by variably controlling the power supply frequency of the high-frequency power supply circuit 25 on the basis of the capacitances C1. First, the resonance controller 6 calculates a resonant frequency where series resonance occurs from known inductance values of the inductors 27 and 28 for resonance and the detected capacitances C1. Then, the resonance controller 6 controls the power supply frequency of the high-frequency power supply circuit 25 so that the power supply frequency of the high-frequency power supply circuit 25 corresponds to the resonant frequency.

The display 7 displays at least one of the detected capacitance C1 and the detected abnormality of the electrode. In addition, the display 7 displays that the abnormality of the electrode corresponds to a caution level and maintenance is necessary or that the abnormality of the electrode corresponds to an abnormal level and an operation should stop, in addition to the value of the capacitance C1. Further, the display 7 may display the current power supply frequency or the rate of change in the capacitance C1 in real time or may display a period where maintenance is recommended so as to be performed.

According to the electrostatic-coupling contactless power supply device 1B of the third embodiment, the following effects are generated in addition to the effects of the first embodiment. That is, since the resonance controller 6 maintains a series resonance state by variably controlling the power supply frequency, large power supply capacity and high power supply efficiency can be maintained even though the capacitance changes within a normal range to some extent during the operation. Further, since the electrostatic-coupling contactless power supply device 1B includes the display 7, a worker is reliably informed of the detection result of the electrode abnormality detecting section 4.

Meanwhile, the invention can also be applied to a parallel-resonant contactless power supply device of which inductors for resonance are connected to the capacitances C1 of capacitors in parallel. The invention may have various additional applications or modifications.

Industrial Applicability

The electrostatic-coupling contactless power supply device of the invention is not limited to a substrate working machine including a component mounting machine, and can also be widely used for industrial machines for other industries that include movable portions and require contactless power supply. In addition, the electrostatic-coupling contactless power supply device can also be used for the supply of power to a traveling electric train in a contactless manner without using a pantograph or the like, the supply of power to a traveling electric automobile from a road surface in a contactless manner, and the like.

Reference Signs List

1, 1A, 1B: electrostatic-coupling contactless power supply device
2, 2A, 2B, 2X: fixed portion
21, 22: power supply electrode
23, 24: capacitor
25: high-frequency power supply circuit
27, 28: inductor for resonance
3, 3A, 3B, 3X: movable portion
31, 32: power receiving electrode
35: power receiving circuit
4, 4A, 4B: electrode abnormality detecting section
41, 41A: closed circuit for detection
42, 42A: AC signal source
43: filter unit
44, 44B: detector
45: driving battery
5: capacitance measuring unit
51, 52: first and second operational amplifiers
53, 54, 55: first to third transistors
6: resonance controller
7: display
91: electrical load
10: component mounting machine
110: substrate carrying device
120: component supply device
130, 140: component transfer device
150: linear motor device
151: track member
160: movable body portion
161: X-axis rail
170: mounting head
180: display setting device
190: machine base

**Claims**

1.  An electrostatic-coupling contactless power supply device (1, 1A, 1B) comprising:

    a plurality of power supply electrodes (21, 22);
    a power supply circuit (25) that supplies power between the plurality of power supply electrodes;
    a plurality of power receiving electrodes (31, 32) that face the plurality of power supply electrodes (21, 22) so as to be spaced apart from the power supply electrodes (21, 22), and receive high-frequency power in a contactless manner;
    a power receiving circuit (35) that converts the power received by the plurality of power receiving electrodes (31, 32) and supplies the converted power to an electrical load (91) provided on the movable portion (3, 3A, 3B); and

an electrode detecting section (4, 4A, 4B) that detects capacitances (C1) of capacitors (23, 24) formed by the power supply electrodes (21, 22) and the power receiving electrodes (31, 32) facing each other so as to be spaced apart from each other, and detects changes of the capacitances (C1), **characterized in that** the electrode detecting section (4, 4A, 4B) includes

a closed circuit (41, 41A) for detection that includes the capacitors (23, 24) and does not include the power supply circuit (25) and the electrical load (91),

an AC signal source (42, 42A) that is provided in the closed circuit (41, 41A) for detection and outputs an AC signal having a detection frequency different from a power supply frequency obtained when the power supply circuit (25) supplies the power,

a filter unit (43) that is provided in the closed circuit (41, 41A) for detection, allows the AC signal having the detection frequency to pass therethrough, and blocks a signal having the power supply frequency, and

a detector (44) that is provided in the closed circuit (41, 41A) for detection and detects the AC signal having the detection frequency.

2. The electrostatic-coupling contactless power supply device (1, 1A, 1B) according to claim 1, wherein the AC signal source (42, 42A) and the detector (44) are disposed on a fixed portion (2, 2A, 2B).

3. The electrostatic-coupling contactless power supply device (1, 1A, 1B) according to claim 1 or 2, wherein the detector (44) is formed of a capacitance measuring unit (5) using an operational amplifier (51, 52) or a capacitance measuring unit (5) using an AC bridge circuit.

4. The electrostatic-coupling contactless power supply device (1, 1A, 1B) according to any one of claims 1 to 3, further comprising:

a display (7) that is connected to the detector (44B) and displays at least one of the detected capacitances (C1) and a detected abnormality of the electrodes (21, 22, 31, 32).

5. The electrostatic-coupling contactless power supply device (1, 1A, 1B) according to any one of claims 1 to 4, wherein the power supply circuit (25) adjusts the power supply frequency obtained when the power supply circuit (25) supplies the power,

the electrostatic-coupling contactless power supply device (1 B) further comprising:

an inductor (27, 28) for resonance that is connected to the capacitor (23, 24) in series and forms a series resonant circuit; and

a resonance controller (6) that maintains a series resonance state of the series resonant circuit by variably controlling the power supply frequency of the power supply circuit (25) on the basis of the capacitances (C1) of the capacitors (23, 24) detected by the electrode detecting section (44B).

**Patentansprüche**

1. Kontaktlose Stromversorgungsvorrichtung (1, 1A, 1B) mit elektrostatischer Kopplung, umfassend:

eine Vielzahl von Stromversorgungselektroden (21, 22);

eine Stromversorgungsschaltung (25), die Strom für die Vielzahl von Stromversorgungselektroden liefert;

eine Vielzahl von Stromaufnahmeelektroden (31, 32), welche zu der Vielzahl von Stromversorgungselektroden (21, 22) ausgerichtet sind und die Stromversorgungselektroden (21, 22) beabstanden, und Hochfrequenzstrom auf kontaktlose Weise aufnehmen;

eine Stromaufnahmeschaltung (35), welche den von der Vielzahl von Stromaufnahmeelektroden (31, 32) aufgenommenen Strom umwandelt und den umgewandelten Strom zu einer elektrischen Last (91) leitet, die an dem beweglichen Abschnitt (3, 3A, 3B) vorgesehen ist; und

einen Elektrodenermittlungsabschnitt (4, 4A, 4B), der die Kapazitäten (C1) von Kondensatoren (23, 24) ermittelt, die von den Stromversorgungselektroden (21, 22) und den Stromaufnahmeelektroden (31, 32) gebildet werden, die so zueinander ausgerichtet sind, dass sie einander beabstanden, und Veränderungen der Kapazitäten (C1) ermittelt, **dadurch gekennzeichnet, dass** der Elektronenermittlungsabschnitt (4, 4A, 4B) beinhaltet

einen geschlossener Stromkreis (41, 41A) zur Ermittlung, der die Kondensatoren (23, 24) enthält und die Stromversorgungsschaltung (25) und die elektrische Last (91) nicht enthält,
eine Wechselstromsignalquelle (42, 42A), die in dem geschlossenen Stromkreis (41, 41A) zur Ermittlung angeordnet ist und ein Wechselstromsignal mit einer Ermittlungsfrequenz ausgibt, die sich von einer Stromversorgungsfrequenz unterscheidet, welche erhalten wird, wenn die Stromversorgungsschaltung (25) den Strom leitet,
eine Filtereinheit (43), die in dem geschlossenen Stromkreis (41, 41A) zur Ermittlung angeordnet ist und das Wechselstromsignal mit der Ermittlungsfrequenz hindurchlässt und ein Signal mit der Stromversorgungsfrequenz blockiert, und
einen Detektor (44), der in dem geschlossenen Stromkreis (41, 41A) zur Ermittlung angeordnet ist und das Wechselstromsignal mit der Ermittlungsfrequenz ermittelt.

2. Kontaktlose Stromversorgungsvorrichtung (1, 1A, 1B) mit elektrostatischer Kopplung nach Anspruch 1, wobei die Wechselstromsignalquelle (42, 42A) und der Detektor (44) an einem festen Abschnitt (2, 2A, 2B) angeordnet sind.

3. Kontaktlose Stromversorgungsvorrichtung (1, 1A, 1B) mit elektrostatischer Kopplung nach Anspruch 1 oder 2, wobei der Detektor (44) aus einer Kapazitätsmessungseinheit (5) unter Verwendung eines Funktionsverstärkers (51, 52) oder einer Kapazitätsmessungseinheit (5) unter Verwendung einer Wechselstrom-Brückenschaltung besteht.

4. Kontaktlose Stromversorgungsvorrichtung (1, 1A, 1B) mit elektrostatischer Kopplung nach einem der Ansprüche 1 bis 3, des Weiteren umfassend:

eine Anzeige (7), die mit dem Detektor (44B) verbunden ist und mindestens eines aus den ermittelten Kapazitäten (C1) und einer ermittelten Abnormalität der Elektroden (21, 22, 31, 32) anzeigt.

5. Kontaktlose Stromversorgungsvorrichtung (1, 1A, 1B) mit elektrostatischer Kopplung nach einem der Ansprüche 1 bis 4,
wobei die Stromversorgungsschaltung (25) die Stromversorgungsfrequenz anpasst, die erhalten wird, wenn die Stromversorgungsschaltung (25) den Strom leitet,
wobei die kontaktlose Stromversorgungsvorrichtung (1, 1 B, 1 B) mit elektrostatischer Kopplung des Weiteren umfasst:

eine Resonanzinduktionsspule (27, 28), die mit dem Kondensator (23, 24) in Reihe geschaltet ist und eine resonante Reihenschaltung bildet; und
eine Resonanzsteuerung (6), die einen Reihen-Resonanzzustand der resonanten Reihenschaltung durch variable Steuerung der Stromversorgungsfrequenz der Stromversorgungsschaltung (25) auf der Basis der Kapazitäten (C1) der Kondensatoren (23, 24) erhält, die von dem Elektrodenermittlungsabschnitt (44B) ermittelt werden.

**Revendications**

1. Dispositif d'alimentation sans contact à couplage électrostatique (1, 1A, 1B) comprenant :

une pluralité d'électrodes d'alimentation (21, 22),
un circuit d'alimentation (25) qui fournit de l'énergie entre la pluralité d'électrodes d'alimentation,
une pluralité d'électrodes de réception d'énergie (31, 32) qui fait face à la pluralité d'électrodes d'alimentation (21, 22) de façon à être à distance des électrodes d'alimentation (21, 22) et recevoir de l'énergie sous haute fréquence et sans contact,
un circuit de réception d'énergie (35) qui convertit l'énergie reçue par la pluralité d'électrodes de réception d'énergie (31, 32) et délivre l'énergie convertie à une charge électrique (91) prévue sur la partie mobile (3, 3A, 3B), et
une section de détection d'électrode (4, 4A, 4B) qui détecte les capacités (C1) de condensateurs (23, 24) formés par les électrodes d'alimentation (21, 22) et les électrodes de réception d'énergie (31, 32) se faisant face de façon à être à distance les unes des autres, et qui détecte les changements de capacités (C1), **caractérisé en ce que**
la section de détection d'électrode (4, 4A, 4B) inclut :

un circuit fermé (41, 41A) de détection qui inclut les condensateurs (23, 24) et n'inclut pas le circuit d'alimentation (25) et la charge électrique (91),

une source de signal alternatif (42, 42A) qui est prévue dans le circuit fermé (41, 41A) de détection et délivre en sortie un signal alternatif dont la fréquence de détection est différente de la fréquence d'alimentation obtenue lorsque le circuit d'alimentation (25) fournit l'énergie,

une unité de filtrage (43) qui est prévue dans le circuit fermé (41, 41A) de détection, qui permet au signal alternatif présentant la fréquence de détection de la traverser et qui bloque un signal présentant la fréquence d'alimentation, et

un détecteur (44) qui est prévu dans le circuit fermé (41, 41A) de détection et qui détecte le signal alternatif présentant la fréquence de détection.

2. Dispositif d'alimentation sans contact à couplage électrostatique (1, 1A, 1B) selon la revendication 1, dans lequel la source de signal alternatif (42, 42A) et le détecteur (44) sont placés sur une partie fixe (2, 2A, 2B).

3. Dispositif d'alimentation sans contact à couplage électrostatique (1, 1A, 1B) selon la revendication 1 ou la revendication 2, dans lequel le détecteur (44) est formé d'une unité de mesure de capacité (5) utilisant un amplificateur opérationnel (51, 52) ou une unité de mesure de capacité (5) utilisant un circuit en pont alternatif.

4. Dispositif d'alimentation sans contact à couplage électrostatique (1, 1A, 1B) selon l'une quelconque des revendications 1 à 3, comprenant en outre :

un afficheur (7) relié au détecteur (44B) et qui affiche au moins l'une des capacités (C1) détectées ainsi qu'une anomalie détectée des électrodes (21, 22, 31, 32).

5. Dispositif d'alimentation sans contact à couplage électrostatique (1, 1A, 1B) selon l'une quelconque des revendications 1 à 4,

dans lequel le circuit d'alimentation (25) ajuste la fréquence d'alimentation obtenue lorsque le circuit d'alimentation (25) fournit l'énergie,

le dispositif d'alimentation sans contact à couplage électrostatique (1B) comprenant en outre :

une bobine d'inductance (27, 28) autorisant une résonance, laquelle est reliée au condensateur (23, 24) en série et forme un circuit résonnant série, et

un contrôleur de résonance (6) qui maintient un état de résonance série du circuit résonnant série en régulant de manière variable la fréquence d'alimentation du circuit d'alimentation (25) sur la base des capacités (C1) des condensateurs (23, 24) détectées par la section de détection d'électrode (44B).

[FIG. 1]

[FIG. 2]

[FIG. 3]

[FIG. 4]

[FIG. 5]

[FIG. 6]

[FIG. 7]

1A

91

35

42A 422 431 4A

421

43

432

31 45 32

MOVABLE
PORTION 3A

23 41A 24

(CAPACITANCE C1) (CAPACITANCE C1)

FIXING
PORTION 2A

21 22

44

442 441

25

[FIG. 8]

**REFERENCES CITED IN THE DESCRIPTION**

**Patent documents cited in the description**

- JP 2012034494 A

- EP 1689062 A1